# EUROPÄISCHE PATENTSCHRIFT

(11) **EP 3 013 596 B1**
(45) Veröffentlichungstag und Bekanntmachung des Hinweises auf die Patenterteilung: **10.10.2018**
(21) Anmeldenummer: 14734394.1
(22) Anmeldetag: 24.06.2014
(51) Int. Cl.: B42D 15/00, B42D 25/00

(54) **SICHERHEITSELEMENT MIT ADAPTIVEN FOKUSSIERENDEN OPTISCHEN ELEMENTEN**
SECURITY ELEMENT WITH ADAPTIVE FOCUSING OPTICAL ELEMENTS
ÉLÉMENT DE SÉCURITÉ DOTÉ D'ÉLÉMENTS OPTIQUES À FOCALISATION ADAPTATIVE

(30) Priorität: 28.06.2013 DE 102013010941
(43) Veröffentlichungstag der Anmeldung: 04.05.2016
(73) Patentinhaber: Giesecke+Devrient Currency Technology GmbH, 81677 München (DE)
(72) Erfinder: SCHIFFMANN, Peter, 81673 München (DE); KECK-ANGERER, Angelika, 80797 München (DE); BORNSCHLEGL, Alexander, 81735 München (DE); IMHOF, Martin, 81927 München (DE)
(86) Internationale Anmeldenummer: PCT/EP2014/001705
(87) Internationale Veröffentlichungsnummer: WO 2014/206550

(56) Entgegenhaltungen:
- WO-A2-2006/125224
- DE-A1-102008 053 099
- DE-A1-102008 053 099

## Beschreibung

Die Erfindung betrifft ein Sicherheitselement für Sicherheitspapiere, Wertdokumente, Ausweiskarten oder dergleichen, das aus einer rasterartigen Anordnung von fokussierenden optischen Elementen besteht. Jedes der fokussierenden optischen Elemente weist einen Brennpunkt oder eine Brennlinie auf, so dass die rasterartige Anordnung von fokussierenden optischen Elementen Abbildungselemente erkennbar abbildet, die sich im Brennpunkt oder der Brennlinie der fokussierenden optischen Elemente befinden.

Hierzu ist beispielsweise aus der DE 10 2005 062132 A1 ein Sicherheitselement in Form von Fäden und Folien für Sicherheitspapiere, Wertdokumente und dergleichen bekannt, das eine mikrooptische Moire-Vergrößerungsanordnung aufweist. Diese Moire-Vergrößerungsanordnung besteht aus einem Motivbild über dem sich Mikrofokussierelemente befinden. Das Motivbild besteht aus einer periodischen oder zumindest lokal periodischen Anordnung von Mikromotivelementen mit Motivhöhen und Motivabständen von 10 µm bis 40 µm. Die Mikrofokussierelemente sind ebenfalls periodisch oder zumindest lokal periodisch angeordnet. Die Mikromotivelemente befinden sich in der Fokusebene der Mikrofokussierelemente. Beide Elemente sind in einem geregelten Raster angeordnet. Durch eine gezielt eingestellte Verkippung der beiden Raster zueinander entsteht ein Vergrößerungseffekt. Der eingestellte Verkippungswinkel bestimmt die Vergrößerung. Das Motivbild ist auf ein Substrat aufgedruckt oder aufgeprägt, das bevorzugt aus einer zumindest bereichsweise lichtdurchlässigen Folie besteht. Die Mikrofokussierelemente sind auf der zweiten Folienseite in eine Lackschicht eingeprägt. Die Trägerfolie der Mikrostrukturelemente und der Mikrofokussierelemente bildet den Abstandshalter, der die Mikrostrukturelemente in die Fokusebene der Mikrofokussierelemente setzt, um so eine scharfe Abbildung zu erzeugen.

Aus WO 2011/012460 A2 ist ein Sicherheitselement bekannt, das eine oder mehrere abbildende Optikanordnungen aufweist, die alle jeweils ein zugeordnetes Objekt nur vor die Oberseite vergrößert abbilden. Die Optikanordnung umfasst mehrere flächig in einem ersten Muster angeordnete reflektive Mikroabbildungselemente, insbesondere Mikrohohlspiegel. Das zugeordnete Objekt ist als Mikrostrukturobjekt mit mehreren Mikrostrukturen ausgebildet, die so in einem an das erste Muster angepassten Mikrostrukturmuster angeordnet sind, dass mittels der reflektiven Mikroabbildungselemente das Mikrostrukturobjekt vor die Oberseite vergrößert abgebildet wird.

Sicherheitselemente mit Sicherheitsmerkmalen, die aus Linsen oder Hohlspiegeln bestehen, sind seit vielen Jahren auf dem Markt erhältlich und werden sogar als Folienelemente für handelsübliche Verpackungen, z.B. Verpackungen für Tonerpatronen von Druckern, frei gehandelt. Deshalb stellen die aus dem Stand der Technik bekannten Sicherheitselemente keine große Hürde für einen Fälscher mehr dar.

DE 10 2008 053099 A1 offenbart den Oberbegriff des Anspruchs 1.

Der Erfindung liegt die Aufgabe zugrunde, ein gattungsgemäßes Sicherheitselement derart weiterzubilden, dass der Schutz gegenüber Fälschungen weiter erhöht wird.

Diese Aufgabe wird durch die Merkmale des unabhängigen Anspruchs gelöst. Weiterbildungen der Erfindung sind Gegenstand der abhängigen Ansprüche.

Erfindungsgemäß ist die Lage der Brennpunkte oder der Brennlinien mindestens eines Teils der fokussierenden optischen Elemente in Bezug auf die Abbildungselemente durch Einwirkung äußerer Einflüsse beeinflussbar. Die äußeren Einflüsse sind mechanischer Druck bzw. mechanische Verformung.

Diese Beeinflussung führt dazu, dass die Abbildungselemente, die sich zuvor außerhalb der Brennpunkte oder Brennlinien der fokussierenden optischen Elemente befanden, nach Einwirkung der äußeren Einflüsse im Brennpunkt oder der Brennlinie mindestens eines fokussierenden optischen Elements angeordnet sind. Alternativ oder zusätzlich führt die Beeinflussung dazu, dass die Abbildungselemente, die sich zuvor im Brennpunkt oder in der Brennlinie mindestens eines fokussierenden optischen Elements befanden, nach Einwirkung der äußeren Einflüsse außerhalb des Brennpunkts oder der Brennlinie der fokussierenden optischen Elemente angeordnet sind.

Gemäß einer bevorzugten Ausführungsform ist vorgesehen, dass die fokussierenden optischen Elemente Linsen, Fresnel-Linsen oder Hohlspiegel oder eine Kombination aus nebeneinander angeordneten Linsen, Fresnel-Linsen oder Hohlspiegeln sind.

Das Material, aus dem die fokussierenden optischen Elemente bestehen, weist einen Brechungsindex auf, der gemäß einer weiteren bevorzugten Ausführungsform durch Einwirkung der oben genannten äußeren Einflüsse änderbar ist. Hierbei bleibt zwar die geometrische Form der fokussierenden optischen Elemente erhalten, durch die Änderung des Brechungsindexes wird jedoch die Brennweite verändert. Beispielsweise ändert sich der Brechungsindex bestimmter organischer Verbindungen und/oder Polymere unter Einwirkung von Licht, indem beispielsweise eine Änderung der Konformation von cis zu trans stattfindet.

Erfindungsgemäß werden somit über die äußeren Einflüsse die fokussierenden optischen Elemente selbst beeinflusst.

Erfindungsgemäß bestehen die fokussierenden optischen Elemente aus einem elastischen oder plastischen Material, so dass sich die Brennweite der fokussierenden optischen Elemente unter Einwirkung von mechanischem Druck ändert, der auf die fokussierenden optischen Elemente einwirkt. Üblicherweise ist bei einem elastischen Material der Vorgang der Verformung reversibel gegebenenfalls mit einer bestimmten Relaxationszeit während bei einem plastischen Material der Vorgang der Verformung nicht reversibel ist.

Gemäß einer weiteren Ausführungsform wird die Form der fokussierenden optischen Elemente durch Einwirkung äußerer Einflüsse derart verändert, dass sie nach der Einwirkung der äußeren Einflüsse keinen Brennpunkt oder keine Brennlinie mehr aufweisen. Die fokussierenden optischen Elemente werden durch die äußeren Einflüsse zu nicht mehr fokussierenden Elementen. Alternativ dazu weisen die fokussierenden optischen Elemente ohne die Einwirkung äußerer Einflüsse keinen Brennpunkt oder keine Brennlinie auf und wird die Form der fokussierenden optischen Elemente bei Einwirkung äußerer Einflüsse derart verändert, dass sie nach der Einwirkung der äußeren Einflüsse einen Brennpunkt oder eine Brennlinie aufweisen.

Erfindungsgemäß weist das Sicherheitselement mindestens eine Trägerschicht auf, wobei auf einer Seite der Trägerschicht die fokussierenden optischen Elemente angeordnet sind und sich die Abbildungselemente auf der gegenüberliegenden Seite der Trägerschicht befinden. Bei dieser Ausführungsform sind die fokussierenden optischen Elemente und die Abbildungselemente somit in einem einzigen Sicherheitselement miteinander vereinigt.

Die Änderung der Lage des Brennpunktes oder der Brennlinien der fokussierenden optischen Elemente in Bezug auf die Abbildungselemente kann reversibel oder irreversibel sein. Im ersten Fall kehren die fokussierenden optischen Elemente oder die Zwischenschicht nach Abschalten der äußeren Einflüsse innerhalb einer bestimmten Relaxationszeit wieder in ihre ursprüngliche Form oder in ihren ursprünglichen Zustand zurück. Im zweiten Fall verbleiben die fokussierenden optischen Elemente oder die Zwischenschicht auch nach dem Abschalten der äußeren Einflüsse in ihrer veränderten Form oder ihrem veränderten Zustand.

Besonders bevorzugt ist die rasterartige Anordnung der fokussierenden optischen Elemente abgestimmt auf die Position der Abbildungselemente. Hierbei ergeben sich beispielsweise die aus dem Stand der Technik bekannten Moire-Magnifier oder andere Vergrößerungsanordnungen, beispielsweise mit einem Bewegungs- oder Kippeffekt.
Das Raster, in dem die fokussierenden optischen Elemente angeordnet sind, besteht aus einem oder mehreren fokussierenden optischen Elementen. Streng genommen kann zwar bei dem Sonderfall eines einzelnen fokussierenden optischen Elements nicht von einem Raster oder einer Anordnung dieses Elements in einem Raster im üblichen Sinne gesprochen werden, im Sinne dieser Erfindung wird jedoch auch bereits ein einziges fokussierendes optisches Element des Sicherheitselements als Raster bzw. rasterartige Anordnung verstanden. Ein derartiges einzelnes fokussierendes optisches Element ist beispielsweise eine Fresnel-Linse. Im "Normalfall" und damit besonders bevorzugt besteht die rasterartige Anordnung von fokussierenden optischen Elementen aus einer Vielzahl von fokussierenden optischen Elementen, beispielsweise Mikrolinsen oder Mikrohohlspiegeln, die zueinander beispielsweise linienförmig, schachbrettförmig oder wabenförmig bzw. rechteckig, rautenförmig oder hexagonal angeordnet sein können. Selbstverständlich ist auch jede andere rasterartige Anordnung möglich. Das Raster ist charakterisiert durch einen bestimmten Abstand, den die einzelnen fokussierenden optischen Elemente zueinander aufweisen, wobei dieser Abstand bei allen fokussierenden optischen Elementen gleich sein kann oder beispielsweise sinusförmig oder zufällig moduliert werden kann.

Anwendungsbereiche des erfindungsgemäßen Sicherheitselements können sein: Ausweisdokumente (mit einem Substrat aus Papier oder einem Polymer oder einem Hybridmaterial oder in Form einer Ausweiskarte), Versicherungskarten, Führerscheine, Banknoten (mit einem Substrat aus mindestens einer Lage aus einem Papier oder einem Polymer oder einem Hybridmaterial), Schecks, Steuermarken, Markenschutzetiketten, Garantieurkunden, Urkunden, Eintrittskarten, Geschenkgutscheine usw.

Es versteht sich, dass die vorstehend genannten und die nachfolgend noch zu erläuternden Merkmale nicht nur in den angegebenen Kombinationen, sondern auch in anderen Kombinationen einsetzbar sind, ohne den Rahmen der vorliegenden Erfindung zu verlassen, soweit dies von dem Schutzumfang der Ansprüche erfasst ist.

Anhand der nachfolgenden Ausführungsbeispiele und den ergänzenden Figuren werden die Vorteile der Erfindung erläutert. Die Ausführungsbeispiele stellen bevorzugte Ausführungsformen dar, auf die jedoch die Erfindung in keinerlei Weise beschränkt sein soll. Des Weiteren sind die Darstellungen in den Figuren des besseren Verständnisses wegen stark schematisiert und spiegeln nicht die realen Gegebenheiten wieder. Insbesondere entsprechen die in den Figuren gezeigten Proportionen nicht den in der Realität vorliegenden Verhältnissen und dienen ausschließlich zur Verbesserung der Anschaulichkeit. Des Weiteren sind die in den folgenden Ausführungsbeispielen beschriebenen Ausführungsformen der besseren Verständlichkeit wegen auf die wesentlichen Kerninformationen reduziert. Bei der praktischen Umsetzung können wesentlich komplexere Muster oder Bilder zur Anwendung kommen.

Im Einzelnen zeigen schematisch:
- Fig. 1: ein Sicherheitselement mit einer Schicht von Abbildungselementen,
- Fig. 2: ein Sicherheitselement mit zwei verschiedenen Schichten von Abbildungselementen,
- Fig. 3: ein Sicherheitselement mit zwei verschiedenen Schichten von Abbildungselementen gemäß Fig. 2 und unterschiedlich beeinflussbaren fokussierenden optischen Elementen,
- Fig. 4: ein Sicherheitselement mit fokussierenden optischen Elementen, deren Brennweite mittels einer mechanisch komprimierbaren Zwischenschicht beeinflussbar ist und hierbei in Fig. 4a mit einer gleichmäßig dicken Zwischenschicht und in Fig. 4b mit unterschiedlich dicken Zwischenschichten,
- Fig. 5: ein Sicherheitselement mit fokussierenden optischen Elementen, deren Brennweite mittels einer in Teilbereichen mechanisch komprimierbaren Zwischenschicht beeinflussbar ist,
- Fig. 6: ein erfindungsgemäßes Sicherheitselement mit fokussierenden optischen Elementen, die mechanisch komprimierbar ausgestaltet sind,
- Fig. 7: das Sicherheitselement aus Fig. 4 angeordnet auf einem Träger,
- Fig. 8: ein Sicherheitselement mit fokussierenden optischen Elementen, deren Brennweite mittels einer viskosen Zwischenschicht beeinflussbar ist und hierbei in Fig. 8a ohne äußere Beeinflussung und in Fig. 8b mit äußerer Beeinflussung,
- Fig. 9: ein Sicherheitselement mit fokussierenden optischen Elementen, deren Fokus mittels einer biegbaren Trägerfolie beeinflussbar ist und hierbei in Fig. 9a ohne äußere Beeinflussung, in Fig. 9b mit äußerer Beeinflussung bei biegbarer Zwischenschicht und in Fig. 9c mit äußerer Beeinflussung bei einer zweiten nicht biegbaren Trägerschicht,

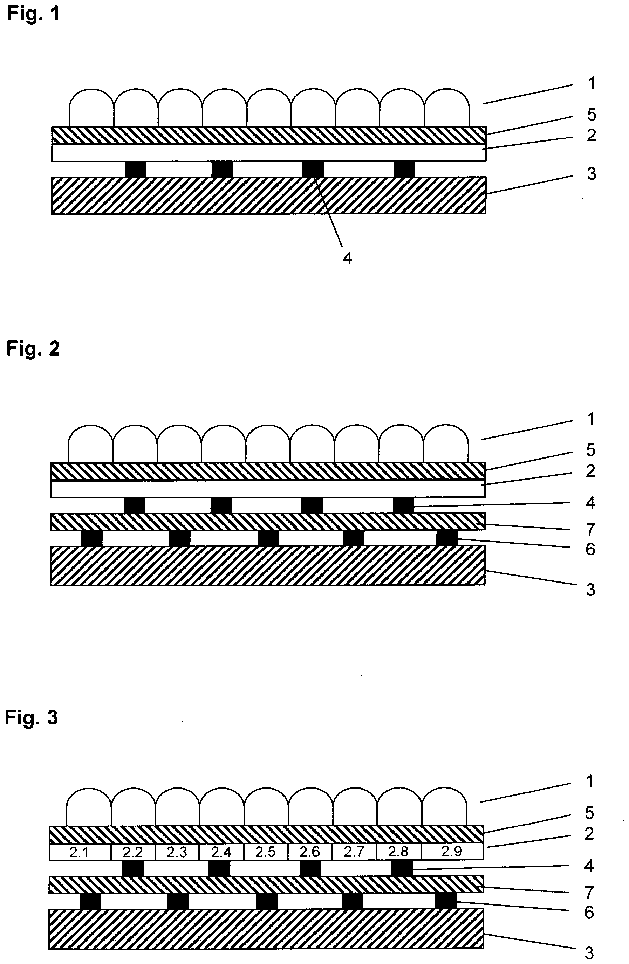

Die Ausführungsformen der Fig. 1 bis 5 und 7 bis 9 sind nicht beansprucht und erleichtern das Verständnis der Erfindung, insbesondere der abhängigen Ansprüche.

Die Fig. 1 zeigt ein Sicherheitselement in Form eines schaltbaren Moire-Magnifiers. Auf einer transparenten oder zumindest transluzenten Trägerfolie 5 sind eine Vielzahl von fokussierenden optischen Elementen 1 angeordnet, die als plankonvexe Linsen ausgebildet sind. Unterhalb der Trägerfolie 5 befindet sich eine transparente oder zumindest transluzente elektrisch leitfähige Beschichtung 2, die sich bei Anlegen eines elektrischen Stroms erwärmt und die Brennweite der fokussierenden optischen Elemente 1 verändert. Zwischen der elektrisch leitfähigen Beschichtung 2 und einem Substrat 3 ist eine Vielzahl von Abbildungselementen 4 angeordnet. Die Abbildungselemente 4 sind beispielsweise Mikrostrukturelemente, wie sie üblicherweise für Moire-Magnifier verwendet werden. Das Substrat 3 kann hierbei beispielsweise ein Papier- oder Kunststoffsubstrat oder eine Banknote sein.
Hier und im Folgenden wird der Begriff der Trägerfolie und der Trägerschicht in ihrer Funktion gleichbedeutend verwendet.
Lichtdurchlässig bzw. transluzent im Sinne dieser Erfindung bedeutet, dass ein Objekt auftreffendes Licht in einem bestimmten Anteil hindurchtreten lässt. Trifft Licht auf eine Seite des Objekts auf, wird ein bestimmter Anteil des Lichtes bis zu der anderen Seite des Objekts hindurchgelassen und tritt dort wieder aus. Je größer der prozentuale Anteil des hindurchtretenden Lichtes bezogen auf das auftreffende Licht ist, desto lichtdurchlässiger bzw. transluzenter ist das Objekt. Liegt der prozentuale Anteil bei mindestens 90 %, d.h. lässt das Objekt das auftreffende Licht wie bei einem Fenster nahezu ungeschwächt hindurchtreten, wird das Objekt als transparent bezeichnet. Hierbei ist auch eine geringfügige Einfärbung des transparenten Materials oder der fokussierenden Elemente möglich, beispielsweise mit einem Rot- oder Grünton. Ein Objekt, das zwischen 90 % und 20 % des auftreffenden Lichtes hindurchtreten lässt, wird als teiltransparent bezeichnet. Ein Objekt hingegen, das weniger als 20 %, bevorzugt unter 10 % und besonders bevorzugt etwa 0 % des auftreffenden Lichtes hindurchtreten lässt, d.h. bei dem der Anteil des hindurchtretenden Lichtes bezogen auf das auftreffende Licht gering oder nahe oder gleich null ist, wird als opak oder als nicht lichtdurchlässig bezeichnet.

Im Ausgangszustand, wenn keine elektrische Spannung an der elektrisch leitfähigen Schicht 2 anliegt, liegen die Abbildungselemente 4 außerhalb der Brennweite der fokussierenden optischen Elemente 1, so dass sie nicht scharf gestellt und nicht vergrößert dargestellt werden und damit visuell nicht erkennbar bzw. lesbar sind. Bei Anliegen einer elektrischen Spannung an der elektrisch leitfähigen Schicht 2 werden die fokussierenden optischen Elemente 1 derart verformt, dass ihr Brennpunkt auf die Abbildungselemente 4 scharf gestellt wird und diese damit vergrößert und visuell erkennbar werden.

Selbstverständlich ist es auch möglich, dass die fokussierenden optischen Elemente 1 so ausgebildet sind, dass im Ausgangszustand die Abbildungselemente 4 innerhalb und bei Anliegen einer elektrischen Spannung außerhalb der Brennweite der fokussierenden optischen Elemente 1 liegen.

Die Mikrostruktur kann im visuellen und/oder im infraroten oder ultravioletten Wellenlängenbereich sichtbar bzw. erkennbar sein. Deshalb ist das Sicherheitsmerkmal auch als maschinenlesbares Merkmal für einen entsprechenden Sensor einer Banknotenbearbeitungsmaschine geeignet. Die Spannungsversorgung der elektrisch leitfähigen Schicht 2 kann in diesem Fall auch direkt im Sensor während der Prüfung der Banknote erfolgen.

Bei einem besonders einfachen Ausführungsbeispiel besteht das Sicherheitselement lediglich aus einer transparenten oder mindestens transluzenten Trägerschicht, deren Dicke durch äußere Einflüsse veränderbar ist, wobei auf eine Seite dieser Trägerschicht die fokussierenden optischen Elemente 1 und auf der gegenüberliegenden Seite die Abbildungselemente 4 angeordnet sind. Als Trägerschicht kann hierbei besonders bevorzugt eine Folie verwendet werden, die eine Öffnung in einem Substrat einer Banknote oder einer Ausweis- oder Kreditkarte verschließt. Die Dicke dieser Trägerschicht liegt hierbei bei einer Banknote im Bereich von etwa 10 µm bis etwa 120 µm und bei einer Ausweis- oder Kreditkarte im Bereich von etwa 100 µm bis etwa 1000 µm.

Fig. 2 zeigt das Sicherheitselement aus Fig. 1, bei dem zusätzlich hinter einer weiteren transparenten oder zumindest transluzenten Trägerfolie 7 eine Vielzahl weiterer Abbildungselemente 6 angeordnet ist. Die Brennweite der fokussierenden optischen Elemente 1 ist hierbei abhängig von der Größe der elektrischen Spannung, die an der elektrisch leitfähigen Schicht 2 anliegt. Je größer diese elektrische Spannung ist, desto stärker ändert sich die Brennweite. Beispielsweise liegen bei einer ersten Spannung U1, die an der elektrisch leitfähigen Schicht 2 anliegt, die Abbildungselemente 4 im Fokus der optischen Elemente 1 und bei einer zweiten Spannung U2 die Abbildungselemente 6. Somit können je nach angelegter Spannung unterschiedliche Motive "scharf" gestellt werden.

Es können daher beispielsweise mindestens drei verschiedene Zustände realisiert werden:
- es liegt keine elektrische Spannung an, so dass durch das Sicherheitselement keine erkennbare Information dargestellt wird,
- es liegt eine geringe elektrische Spannung an, so dass eine erste Information dargestellt wird,
- es liegt eine hohe elektrische Spannung an, so dass eine zweite Information dargestellt wird.

Wobei für die dargestellte Information beispielsweise die folgenden Varianten möglich sind:
- auf einer Banknote ist die erste Information ein Portrait und die zweite Information die Wertzahl,
- auf einer Banknote ist die erste Information die Wertzahl einer Banknote in arabischen und die zweite Information die Wertzahl in römischen Ziffern,
- auf einem Ausweisdokument ist die erste Information das Portrait einer Person in frontaler Ansicht und die zweite Information das Portrait in einer Seitenansicht,
- auf einem Ausweisdokument ist die erste Information das Portrait einer Person und die zweite Information die biometrischen Daten zu der Person,
- auf einer Banknote oder einem Ausweisdokument ist die erste Information das Portrait und die zweite Information ein maschinenlesbares Merkmal,
- auf einem Ausweisdokument ist die erste Information ein Sicherheitsmerkmal, das direkt sichtbar oder mittels frei verfügbarer Hilfsmittel abrufbar ist, und die zweite Information nur für Prüfer mit einem professionellen Hilfsmittel abrufbar, z.B. durch die Polizei.

Eine bevorzugte Ausführungsform betrifft einen stufenlos einstellbaren Moire-Magnifier. Bei dieser Ausführungsform wird die elektrische Spannung nicht in Stufen, sondern stufenlos verändert. Die Veränderung kann beispielsweise linear von einer unteren elektrischen Spannung U1 bis zu einer oberen elektrischen Spannung U2 > U1 oder pulsierend mit einer bestimmten Frequenz verändert werden. Dadurch werden mindestens zwei verschiedene Informationen bzw. auch Mischsituationen von mindestens zwei Informationen erzeugt. Bevorzugt können auch Bewegungsbilder erzeugt werden, bei denen sich beispielsweise ein Objekt periodisch von links nach rechts und wieder zurück hin- und herbewegt.

Bei einer geringen Frequenz der Spannungsänderung ergeben sich weiche Übergänge von einer zur nächsten Information, bedingt durch Unschärfesituationen. Bei hohen Frequenzen erzeugt man ein nahezu stehendes Bild der mindestens zwei verschiedenen Informationen. Bei Frequenzen über 50 Hz kann ein Mischbild aus erster und zweiter Information erscheinen.

Gibt es deutlich mehr als zwei unterschiedliche Informationen, so können auch kleine Animationen oder scheinbar bewegte Sequenzen erzeugt werden.

Fig. 3 zeigt das Sicherheitselement aus Fig. 2, bei dem zusätzlich die elektrisch leitfähige Schicht 2 in Teilbereiche 2.1 bis 2.9 aufgeteilt ist, die unabhängig voneinander und/oder mit unterschiedlichen elektrischen Spannungen oder Stromstärken beaufschlagt bzw. angesprochen werden können. Es ergibt sich somit ein partiell unterschiedlich einstellbarer Moire-Magnifier. Es ist somit möglich, einzelne Informationen nur in Teilbereichen visuell sichtbar zu machen oder unterschiedliche Informationen miteinander zu verbinden, auch in einer oder in unterschiedlichen Ebenen der Abbildungselemente 4 oder 6.

Auf diese Weise ist es auch möglich eine 7-Segmentanzeige bzw. Digitalanzeige zu realisieren. Die Mikrostrukturelemente sind so ausgebildet, dass die benötigten Flächen für jedes Segment gebildet werden. Jedes Segment wiederum wird über einen einzelnen Teilbereich des Linsenarrays abgedeckt.

Ein weiteres Ausführungsbeispiel betrifft die Kombination unterschiedlicher Farben im Aufbau der Mikrostrukturelemente. Das bedeutet, es wird eine Information aus Segmenten einer Farbe (z.B. Gelb) aufgebaut, eine weitere Information in einer anderen Farbe (z.B. Blau). Je nachdem welche der Linsen nun aktiviert werden, ist zuerst eine gelbe Information sichtbar, (z.B. Wertzahl), dann eine blaue Information (z.B. Abkürzung der Währung) und beim Zusammenschalten der Linsen ist dann eine dritte Information aus der Mischfarbe auf Basis der subtraktiven Farbmischung (in diesem Beispiel Grün) sichtbar, z.B. das Wort "valid".

Ein weiteres Ausführungsbeispiel betrifft eine Ausführung als winkelabhängiges Kippbild. In diesem Fall wird nicht das Funktionsprinzip eines Moire-Magnifiers zu Grunde gelegt, sondern das Funktionsprinzip eines Lentikularbildes. Hierbei wird die Bildinformation (ein- oder mehrfarbig) entsprechend des Durchmessers bzw. der horizontalen Abmessung der Linsen in Streifen zerlegt. Bei nicht aktivierten Linsen ist keine Information zu erkennen. Bei Aktivierung wird winkelabhängig jeweils eine Information sichtbar gemacht. Bei Neigung des Sicherheitselements und damit einem anderen Blickwinkel wird eine andere Information sichtbar. Handelt es sich um sphärische Linsen, können auch mehr als zwei Informationen sichtbar gemacht werden, da der Kippeffekt in unterschiedlichen horizontalen Richtungen realisierbar ist. Die Informationen können wiederum in unterschiedlichen Farben angelegt sein. Je nach Aufbereitung der zu Grunde liegenden Bildinformation kann nicht nur ein Informationswechsel erfolgen, sondern beispielsweise auch eine dreidimensionale Darstellung (beispielsweise einer Wertzahl) mit räumlicher Tiefenwirkung (3D-Effekt) erzeugt werden. Weitere Effekte, die insbesondere mit Lentikularlinsen darstellbar sind, sind beispielsweise Zoomeffekt, Bewegungs- und Filmanimation.

Es ist auch eine Kombination aus Moire-Magnifier-Effekt und Lentikulareffekt möglich. Das bedeutetet, es wird in einem aktivierten Teilbereich ein Lentikulareffekt umgesetzt, bei Aktivierung weiterer Linsen entsteht ein Moiré-Magnifier-Effekt, der dann auf Grund der räumlichen Tiefe scheinbar eine Ebene über der Lentikular- oder Kippbildinformation schwebt. Beispielsweise wird ein Kippbild mit einer Wertzahl kombiniert, die von negativer zu positiver Darstellung wechselt und darüber der Moire-Magnifier-Effekt mit scheinbar schwebendem Währungskürzel wie € oder $.

Ein weiterer Effekt ergibt sich durch die Kombination mit Fluoreszenzpigmenten in der Mikrostruktur eines Moire-Magnifiers. Hierbei ist unter normalen Betrachtungsbedingungen einer der oben beschriebenen Moire-Magnifier-Effekte zu sehen. Als zusätzlichen Effekt wird bei Einbringung von Fluorpigmenten in die Druckfarben der Mikrostruktur unter UV Licht eine weitere Information sichtbar. Auch hier ist wieder eine Kombination aus unterschiedlich farbigen Fluoreszenzpigmenten möglich, die je nach Aktivierung der jeweiligen Linsen je eine Farbe zeigen und in der Kombination die jeweilige Mischfarbe (in diesem Fall auf Basis der additiven Farbmischung).

Anstelle von Fluidlinsen können auch elektrisch schaltbare Flüssigkeiten verwendet werden, welche durch Anlegen einer elektrischen Spannung den Abstand zwischen zwei Flächen verändern. Hierbei besteht der Aufbau des Sicherheitselements beispielsweise aus einem nicht veränderlichen Mikrolinsenarray auf einer transparenten Träger, dem elektrisch schaltbaren Mikrofluid und einem weiteren Träger mit den Abbildungselementen, die eine Mikroinformation bilden. Durch Anlegen der elektrischen Spannung verändert sich der Abstand der Mikrolinsen zu den Abbildungselementen, so dass im ersten Fall die Mikroinformation über die Linsen vergrößert dargestellt wird, da diese Information im Fokus ist. Im zweiten Fall ist der Abstand nicht auf die Brennweite der Linsen abgestimmt, so dass sich ein unscharfes Bild zeigt. Dieser Ansatz ist auf alle vorab genannten Beispiele ebenfalls anwendbar. Der Vorteil dieser Ausführungsform besteht darin, dass die Mikrolinsen in beliebigen Abmessungen und Größen hergestellt werden können.

Bei Fig. 1, Fig. 2 und Fig. 3 kann anstatt der Änderung der Brennweite der fokussierenden optischen Elemente 1 selbst eine Änderung der Brennweite erfolgen, bei der die fokussierenden optischen Elemente 1 nicht verändert werden, sondern die Dicke der Trägerfolie 5 oder einer anderen Schicht, die zwischen der Trägerfolie 5 und den fokussierenden optischen Elementen 1 liegt. In diesem Fall bleiben die fokussierenden optischen Elemente 1 durch die äußeren Einflüsse unbeeinflusst, lediglich die Dicke der Trägerfolie 5 oder der genannten anderen Schicht wird verändert. Im Fall von Fig. 3 kann die dickenveränderliche Schicht aus einer Vielzahl von nebeneinander angeordneten dickenveränderlichen Teilbereichen bestehen, die einem oder mehreren Teilbereichen 2.1 bis 2.9 zugeordnet sind.
In einem weiteren Ausführungsbeispiel zu Fig. 2 oder Fig. 3 kann zusätzlich auch auf der Trägerfolie 7 eine weitere elektrisch leitfähige Schicht 2 angeordnet sein, die als durchgehende Schicht ausgeführt oder in Teilbereiche unterteilt ist. Grundsätzlich ergibt sich besonders vorteilhaft durch eine Anordnung von mehreren elektrisch leitfähigen oder anderweitig dickenveränderlichen Schichten übereinander ein Sicherheitselement, bei dem die verschiedenen elektrisch leitfähigen oder dickenveränderbaren Schichten unterschiedlichen Schichten von Abbildungselementen zugeordnet sind.

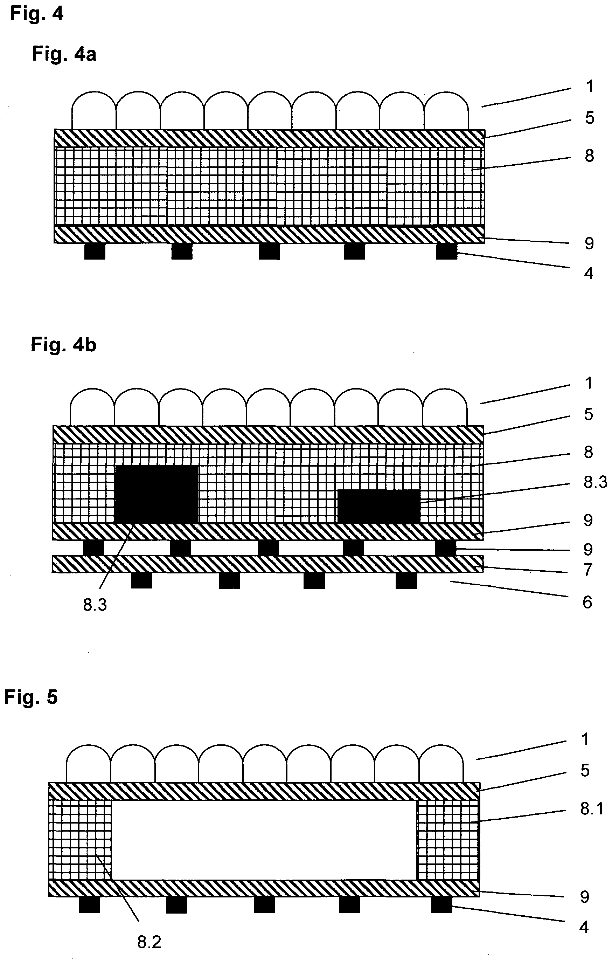

Fig. 4a zeigt ein Sicherheitselement mit fokussierenden optischen Elementen 1, deren Brennweite mittels einer transparenten oder zumindest transluzenten mechanisch komprimierbaren Zwischenschicht 8 beeinflussbar ist. Die transparente komprimierbare Zwischenschicht 8 ist zwischen der Trägerfolie 5 und einer transparenten oder zumindest transluzenten Trägerfolie 9 angeordnet, auf der sich die Abbildungselemente 4 befinden. Die Abbildungselemente 4 können in diesem und den folgenden Ausführungsbeispielen auch auf der Seite der Trägerfolie 5 angeordnet sein, die der komprimierbaren Zwischenschicht 8 zugewandt ist.

In dem Ausführungsbeispiel gemäß Fig. 4a weist die Zwischenschicht 8 im unbelasteten Zustand, d.h. ohne Einwirkung eines mechanischen Drucks von außen, eine gleichmäßige Dicke auf. Durch mechanischen Druck, der auf die Linsen 1 oder die Trägerfolie 9 ausgeübt wird, verformt sich die komprimierbare Zwischenschicht 8 und ändert sich ihre Dicke, so dass der Fokus der fokussierenden optischen Elemente 1 auf die Abbildungselemente 4 gebracht wird oder von ihnen entfernt wird, so dass die Abbildungselemente 4 erkennbar bzw. nicht erkennbar abgebildet werden.

Die komprimierbare Zwischenschicht 8 kann dabei temporär (reversibel) oder dauerhaft (nicht reversibel) verformt werden.

Des Weiteren kann die Zwischenschicht 8 auch aus mehreren neben- oder hintereinander angeordneten Bereichen oder Schichten bestehen, die unterschiedliche Relaxationszeiten aufweisen. Wird die Einwirkung des mechanischen Drucks somit beendet, benötigen die unterschiedlichen Schichten eine unterschiedliche Zeitdauer, um in ihren Ursprungszustand bzw. ihre ursprüngliche Dicke zurückzukehren. Hierbei können unterschiedliche Motive bis zum Ablauf der längsten Relaxationszeit sichtbar werden.

Die komprimierbare Zwischenschicht 8 kann bei einem weiteren Ausführungsbeispiel auch aus mindestens zwei Teilbereichen bestehen, bei der der erste Teilbereich reversibel und der zweite Teilbereich nicht reversibel verformbar ist.

Gemäß einem weiteren Ausführungsbeispiel können die komprimierbare Zwischenschicht 8 und/oder die fokussierenden optischen Elemente 1 Effektpigmente oder eine Mischung aus Effektpigmenten enthalten (z.B. reflektive, transparente oder optisch variable Pigmente).

Fig. 4b zeigt eine Variante von Fig. 4a, bei der die Zwischenschicht 8 in Bereiche mit unterschiedlicher Dicke aufgeteilt ist. Unterhalb der Abbildungselemente 4 ist ähnlich wie in Fig. 2 eine weitere Trägerfolie 7 mit einer Vielzahl weiterer Abbildungselemente 6 angeordnet. Durch Einwirkung eines äußeren mechanischen Drucks wird somit die Zwischenschicht 8 unterschiedlich stark komprimiert bzw. zusammengedrückt. Hierdurch werden die Linsen bereichsweise entweder auf die Abbildungselemente 4 oder die Abbildungselemente 6 fokussiert und jeweils die entsprechenden Abbildungselemente scharf abgebildet. Des Weiteren können Bereiche geschaffen werden, in denen die Linsen unabhängig vom äußeren mechanischen Druck Abbildungselemente grundsätzlich scharf abbilden, wohingegen in anderen Bereichen unterschiedliche Abbildungselemente abhängig von der Höhe des äußeren mechanischen Drucks scharf abgebildet werden.

Diese unterschiedliche Dicke wird hierbei beispielsweise dadurch erzeugt, dass auf die Trägerfolie 9 zunächst bereichsweise eine nicht komprimierbare Schicht 8.3 aufgebracht wird, auf die dann die Zwischenschicht 8 aufgetragen wird. Diese nicht komprimierbare Schicht 8.3 bildet somit einen nicht komprimierbaren "Stopper", gegen den die komprimierbare Zwischenschicht 8 gedrückt wird.

Die Dicke der einzelnen Bereiche der nicht komprimierbaren Schicht 8.3 kann für alle Bereiche gleich oder für unterschiedliche Bereiche unterschiedlich ausgeführt sein. Des Weiteren kann die Dicke mindestens einzelner Bereiche auch derart dick ausgeführt sein, dass sich zwischen ihnen und der Trägerfolie 5 keine Zwischenschicht 8 mehr befindet, so dass diese Bereiche nicht komprimierbar sind.

Fig. 5 zeigt das Sicherheitselement aus Fig. 4a, bei dem anstelle der vollflächigen komprimierbaren Zwischenschicht in Teilbereichen komprimierbare Zwischenschichten 8.1 und 8.2 verwendet werden. In diesem Fall müssen die Zwischenschichten 8.1 und 8.2 nicht zwingend transparent sein, wenn sichergestellt ist, dass die für die Abbildung relevanten Bereiche oder für die eindeutige Erkennbarkeit erforderlichen Teilbereiche der Abbildungselemente 4 außerhalb des Bereichs der Zwischenschicht liegen.

Die komprimierbare Zwischenschicht 8 oder 8.1 und 8.2 kann durch geschäumte oder schwammartige Strukturen oder durch weiche oder hochelastische Polymere gebildet werden.

Die komprimierbare Zwischenschicht 8 oder 8.1 und 8.2 kann auch durch eine mit Luft oder Gas gefüllte Kammer bzw. einen Hohlraum gebildet werden. In diesem Fall dürfen die Innenseiten der Trägerfolien 5 und 9 mindestens im Bereich der Kammer keine adhäsive Oberfläche oder Klebschichten aufweisen, da die Trägerfolien ansonsten miteinander verkleben könnten und die Fokusänderung nicht mehr reversibel ist. Falls eine derartige irreversible Fokusänderung jedoch gewünscht ist, können die Innenseiten der beiden Trägerfolien 5 und 9 adhäsiv ausgestaltet sein.

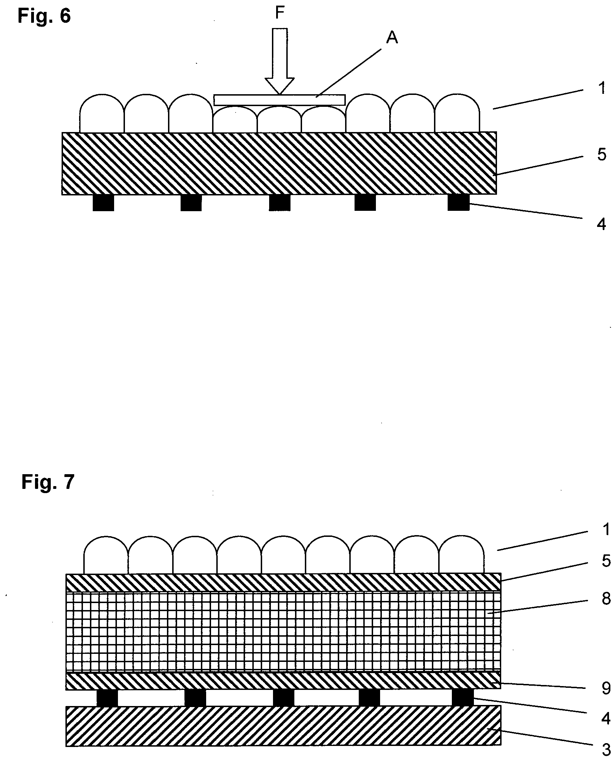

Fig. 6 zeigt ein erfindungsgemäßes Sicherheitselement, bei dem anstelle der komprimierbaren Zwischenschicht die fokussierenden optischen Elemente 1 oder die Linsen selbst mechanisch komprimierbar ausgestaltet sind, so dass sich über eine Änderung der Form bzw. der Wölbung der fokussierenden optischen Elemente 1 die Brennweite oder die Lage der Brennpunkte oder Brennlinien ändert. Eine Kraft F wirkt auf eine Fläche A ein, so dass im Bereich dieser Fläche ein Druck p auf die Linsen ausgeübt wird.

Auch dieses Ausführungsbeispiel ist mit den zuvor genannten Ausführungsbeispielen kombinierbar. Beispielsweise können die Linsen bereichsweise unterschiedliche Relaxationszeiten aufweisen. Wird die Einwirkung des mechanischen Drucks auf die Linsen somit beendet, benötigen die unterschiedlichen Bereiche eine unterschiedliche Zeitdauer, um in ihren Ursprungszustand zurückzukehren. Hierbei kann beispielsweise ein Bewegungseffekt erzeugt werden, der bis zum Ablauf der längsten Relaxationszeit andauert.
Fig. 7 zeigt das Sicherheitselement aus Fig. 4a, wobei die Abbildungselemente 4 zusätzlich auf einem reflektierenden opaken Substrat 3 angeordnet sind. Bevorzugt sind die Abbildungselemente 4 zumindest in Teilbereichen des relevanten Spektralbereichs des einfallenden Lichts von 200 nm bis 1400 nm absorbierend ausgeführt und das Substrat 3 reflektierend.

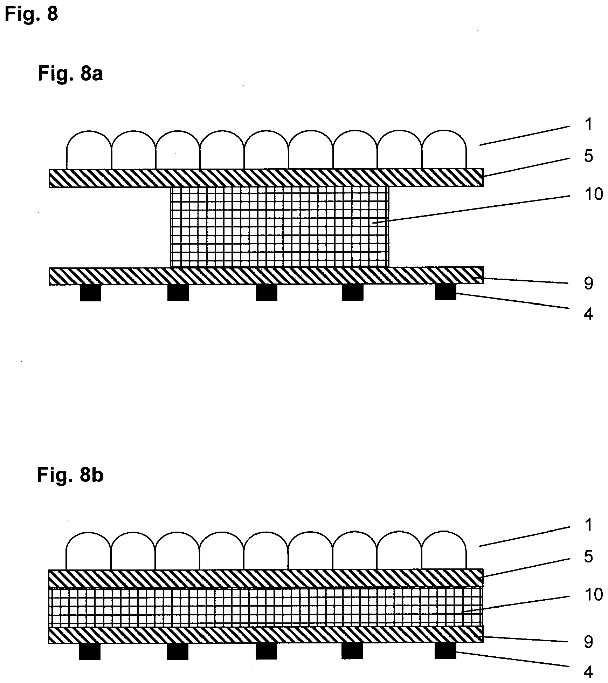

Fig. 8 zeigt ein Sicherheitselement mit fokussierenden optischen Elementen 1, deren Brennweite mittels einer transparenten oder mindestens transluzenten viskosen Zwischenschicht 10 beeinflussbar ist und hierbei in Fig. 8a ohne äußere Beeinflussung und in Fig. 8b mit äußerer Beeinflussung. Die viskose Zwischenschicht 10 besteht beispielsweise aus einem Gel oder einer hochviskosen Flüssigkeit, die durch einen mechanischen Druck verdrängt wird. Da das Volumen der viskosen Zwischenschicht 10 gleich bleibt, ist eine Veränderung ihrer Breite mit einer Veränderung ihrer Höhe bzw. Dicke gekoppelt.

Besonderer Vorteil dieser Ausführungsform ist, dass nicht nur der unmittelbar mit dem mechanischen Druck beaufschlagte Bereich beeinflusst wird, sondern auch die benachbarten Bereiche bzw. das gesamte Sicherheitselement. Denn üblicherweise ist der mit dem mechanischen Druck beaufschlagte Bereich während der Beaufschlagung nicht sichtbar oder erkennbar, da er durch den mechanischen "Stempel" abgedeckt wird, die benachbarten Bereiche jedoch schon. Dies erlaubt eine Sichtbarkeit des Effekts bereits bei der Druckbeaufschlagung.

Ist die Zwischenschicht 10 als nicht transparente Zwischenschicht ausgeführt, sind im Fall von Fig. 8a die nicht durch die Zwischenschicht 10 abgedeckten Bereiche noch sichtbar oder verifizierbar und im Fall von Fig.8b vollständig abgedeckt.
Ein weiteres Ausführungsbeispiel betrifft das Quellen oder Ausdehnen von transparenten Zwischenschichten und Linsen. In dem Fall bestehen die Zwischenschicht oder die Linse aus einem Polymer, welches durch die Aufnahme von Flüssigkeiten oder/und bei Temperaturerhöhung das Volumen vergrößert. Der Vorgang kann reversibel oder nicht reversibel sein. Ein Beispiel für eine Volumenänderung durch Temperaturerhöhung sind sogenannte Expancel-Kügelchen der Fa. AkzoNobel, bei denen sich bei Temperaturerhöhung das in den Kügelchen enthaltene Gas ausdehnt und gleichzeitig die Kapselwand der Kügelchen erweicht. Dadurch entstehen Kügelchen mit deutlich vergrößertem Volumen und damit größerem Durchmesser. Dieser Vorgang ist nicht reversibel.

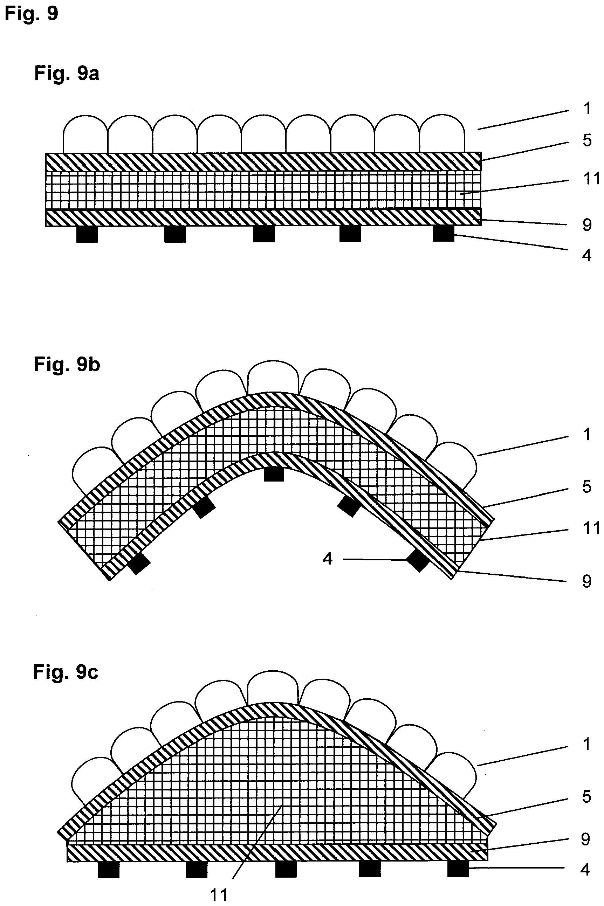

Fig. 9 zeigt ein Sicherheitselement mit fokussierenden optischen Elementen 1, deren Fokus mittels einer biegbaren Trägerschicht 5 beeinflussbar ist. Fig. 9a zeigt das Sicherheitselement in der Ausgangssituation ohne äußere Beeinflussung.

Fig. 9b zeigt eine Ausführungsform des Sicherheitselements, bei der auch die Trägerfolie 9 biegbar ausgeführt ist, mit äußerer Beeinflussung in Form von Biegung. Durch die Biegung des gesamten Sicherheitselements wird die Lage der Trägerfolie 5 mit den fokussierenden optischen Elementen 1 in Bezug auf die Trägerfolie 9 mit den Abbildungselementen 4 verschoben, so dass die Abbildungselemente 4 aus dem Fokus der fokussierenden optischen Elemente 1 heraus- oder hineinbewegt werden.

Fig. 9c zeigt eine Ausführungsform mit nicht biegbarer bzw. starrer Trägerfolie 9. Durch eine Einwirkung eines mechanischen Drucks auf die Randbereiche der Trägerschicht 5 wird die Trägerschicht 5 gebogen, so dass die Zwischenschicht an den Rändern komprimiert und in der Mitte nicht oder nur geringfügig komprimiert wird. Bei einer verdrängbaren Zwischenschicht 8 mit konstantem Volumen wird die Trägerschicht 5 in der Mitte nach oben gedrückt, so wie es in Fig. 9c allerdings nicht maßstäblich dargestellt ist. Die Trägerfolie 9 wird durch die Einwirkung des mechanischen Drucks hingegen nicht verbogen, so dass die Abbildungselemente 4 aus dem Fokus der fokussierenden optischen Elemente 1 heraus- oder hineinbewegt werden.

Alternativ dazu ist es bei einer komprimierbaren oder verdrängbaren Zwischenschicht 11 auch möglich, dass sich durch die Biegung der Abstand zwischen der Trägerfolie 5 und der Trägerfolie 9 ändert. Hierdurch werden die fokussierenden optischen Elemente 1 in Bezug auf die Abbildungselemente 4 fokussiert oder defokussiert. Die Änderung des Abstandes kann hierbei für alle fokussierenden optischen Elemente 1 gleich sein oder je nach verwendetem Material oder Aufbau der Zwischenschicht 11 ungleichmäßig oder gar wellenförmig sein.

In allen oben genannten Ausführungsformen oder Ausführungsbeispielen können als fokussierende optische Elemente auch Hohlspiegel anstatt von oder zusätzlich zu Linsen verwendet werden, wie sie beispielsweise aus WO 2013/056825 A1 bekannt sind. Durch Verformung des Materials, in das die Hohlspiegel eingebracht sind, oder des Materials, mit dem die Hohlspiegel aufgefüllt sind und auf dem die Abbildungselemente angeordnet sind, kann die Brennweite der Hohlspiegel beeinflusst werden.

Des Weiteren können die Hohlspiegel auch mit einer dünnen Folie verschlossen werden, die auf der Oberseite der Hohlspiegel gespannt ist. Auf dieser dünnen Folie sind die Abbildungselemente aufgebracht. Die Hohlspiegel bilden somit Hohlräume, die beispielsweise durch Erwärmung oder mechanisch verformt werden können. Beispielsweise wölbt sich die dünne Folie infolge einer Temperaturerhöhung und damit einer Ausdehnung bzw. Volumenvergrößerung des Gases bzw. der Luft innerhalb des Hohlraums auf, so dass das diesem Hohlspiegel zugeordnete Abbildungselement aus dem Fokus des Hohlspiegels hinausgebracht oder in den Fokus des Hohlspiegels hineingebracht werden kann.

## Patentansprüche

1. Sicherheitselement für Sicherheitspapiere, Wertdokumente, Ausweiskarten oder dergleichen, das aus einer rasterartigen Anordnung von fokussierenden optischen Elementen (1, 14) und Abbildungselementen besteht, wobei jedes der fokussierenden optischen Elemente (1, 14) einen Brennpunkt oder eine Brennlinie aufweist, so dass die rasterartige Anordnung von fokussierenden optischen Elementen (1, 14) die Abbildungselemente (4, 6) erkennbar abbildet, die sich im Brennpunkt oder der Brennlinie der fokussierenden optischen Elemente (1, 14) befinden, wobei die Lage der Brennpunkte oder der Brennlinien mindestens eines Teils der fokussierenden optischen Elemente (1, 14) in Bezug auf die Abbildungselemente (4, 6) durch Einwirkung äußerer Einflüsse beeinflussbar ist, derart dass
• die Abbildungselemente (4, 6), die sich zuvor außerhalb der Brennpunkte oder Brennlinien der fokussierenden optischen Elemente (1, 14) befanden, nach Einwirkung der äußeren Einflüsse im Brennpunkt oder der Brennlinie mindestens eines fokussierenden optischen Elements (1, 14) angeordnet sind und/oder
• die Abbildungselemente (4, 6), die sich zuvor im Brennpunkt oder in der Brennlinie mindestens eines fokussierenden optischen Elements (1, 14) befanden, nach Einwirkung der äußeren Einflüsse außerhalb des Brennpunkts oder der Brennlinie der fokussierenden optischen Elemente (1, 14) angeordnet sind,
wobei die äußeren Einflüsse mechanischer Druck bzw. mechanische Verformung sind, **dadurch gekennzeichnet, dass** die fokussierenden optischen Elemente (1, 14) aus einem elastischen oder plastischen Material bestehen, so dass sich die Brennweite der fokussierenden optischen Elemente (1, 14) unter Einwirkung von mechanischem Druck ändert, der auf die fokussierenden optischen Elemente (1, 14) einwirkt, wobei das Sicherheitselement mindestens eine Trägerschicht (5) aufweist, wobei auf einer Seite der Trägerschicht die fokussierenden optischen Elemente (1, 14) angeordnet sind und sich die Abbildungselemente (4, 6) auf der gegenüberliegenden Seite der Trägerschicht befinden.

2. Sicherheitselement nach Anspruch 1, **dadurch gekennzeichnet, dass** die fokussierenden optischen Elemente (1, 14) Linsen oder Fresnel-Linsen oder Hohlspiegel oder eine Kombination aus nebeneinander angeordneten Linsen oder Fresnel-Linsen oder Hohlspiegeln sind.

3. Sicherheitselement nach einem der vorigen Ansprüche, **dadurch gekennzeichnet, dass** das Material, aus dem die die fokussierenden optischen Elemente (1, 14) bestehen, einen Brechungsindex aufweist und dieser Brechungsindex durch Einwirkung eines äußeren Einflusses änderbar ist.

4. Sicherheitselement nach mindestens einem der vorigen Ansprüche, **dadurch gekennzeichnet, dass** zwischen der rasterartigen Anordnung von fokussierenden optischen Elementen (1, 14) und den Abbildungselementen (4, 6) eine Schicht (8, 8.1, 10) angeordnet ist, deren Dicke und/oder deren Brechungsindex durch Einwirkung äußerer Einflüsse, wie mechanischem Druck und/oder Temperatur, beeinflussbar ist.

5. Sicherheitselement nach mindestens einem der vorigen Ansprüche, **dadurch gekennzeichnet, dass** die Form der fokussierenden optischen Elemente (1, 14) durch Einwirkung äußerer Einflüsse derart verändert ist, dass sie keinen Brennpunkt oder keine Brennlinie mehr aufweisen.

6. Sicherheitselement nach mindestens einem der Ansprüche 1 bis 4, **dadurch gekennzeichnet, dass** die fokussierenden optischen Elemente (1, 14) ohne die Einwirkung äußerer Einflüsse keinen Brennpunkt oder keine Brennlinie aufweisen und die Form der fokussierenden optischen Elemente (1, 14) bei Einwirkung äußerer Einflüsse derart verändert wird, dass sie einen Brennpunkt oder eine Brennlinie aufweisen.

7. Sicherheitselement nach einem der vorigen Ansprüche, **dadurch gekennzeichnet, dass** zwischen der Trägerschicht (5) und den Abbildungselementen (4, 6) eine weitere Schicht (2) angeordnet ist, die durch das Anlegen eines elektrischen Stroms oder eines elektromagnetischen Felds erwärmbar ist.

8. Sicherheitselement nach mindestens einem der vorigen Ansprüche, **dadurch gekennzeichnet, dass** die Änderung der Lage der Brennpunkte oder der Brennlinien der fokussierenden optischen Elemente (1, 14) in Bezug auf die Abbildungselemente (4, 6) reversibel oder irreversibel ist.

9. Sicherheitselement nach mindestens einem der vorigen Ansprüche, **dadurch gekennzeichnet, dass** die rasterartige Anordnung der fokussierenden optischen Elemente (1, 14) und die Position der Abbildungselemente (4, 6) aufeinander abgestimmt sind.

## Claims

1. Security element for security papers, valuable documents, identity cards or the like, consisting of a grid-type arrangement of focusing optical elements (1, 14) and imaging elements, wherein each of the focusing optical elements (1, 14) has a focal point or a focal line, such that the grid-type arrangement of focusing optical elements (1, 14) recognizably images the imaging elements (4, 6) which are situated in the focal point or the focal line of the focusing optical elements (1, 14), wherein the location of the focal points or of the focal lines of at least some of the focusing optical elements (1, 14) with respect to the imaging elements (4, 6) is able to be influenced by the effect of external influences in a manner such that
• after the effect of the external influences, the imaging elements (4, 6) which were previously situated outside the focal points or focal lines of the focusing optical elements (1, 14) are arranged in the focal point or the focal line of at least one focusing optical element (1, 14), and/or
• after the effect of the external influences, the imaging elements (4, 6) which were previously situated in the focal point or in the focal line of at least one focusing optical element (1, 14) are arranged outside the focal point or the focal line of the focusing optical elements (1, 14),
wherein the external influences are mechanical pressure or mechanical deformation, **characterized in that** the focusing optical elements (1, 14) consist of an elastic or plastic material, with the result that the focal length of the focusing optical elements (1, 14) changes under the effect of mechanical pressure that acts on the focusing optical elements (1, 14), wherein the security element has at least one carrier layer (5), wherein the focusing optical elements (1, 14) are arranged on one side of the carrier layer and the imaging elements (4, 6) are situated on the opposite side of the carrier layer.

2. Security element according to Claim 1, **characterized in that** the focusing optical elements (1, 14) are lenses or Fresnel lenses or concave mirrors or a combination of lenses or Fresnel lenses or concave mirrors which are arranged one next to the other.

3. Security element according to one of the preceding claims, **characterized in that** the material of which the focusing optical elements (1, 14) are composed has a refractive index, and this refractive index is changeable by the effect of an external influence.

4. Security element according to at least one of the preceding claims, **characterized in that** a layer (8, 8.1, 10) having a thickness and/or a refractive index that is able to be influenced by the effect of external influences, such as mechanical pressure and/or temperature, is arranged between the grid-type arrangement of focusing optical elements (1, 14) and the imaging elements (4, 6).

5. Security element according to at least one of the preceding claims, **characterized in that** the shape of the focusing optical elements (1, 14) is changed by the effect of external influences such that they no longer have a focal point or a focal line.

6. Security element according to at least one of Claims 1 to 4, **characterized in that,** without the effect of external influences, the focusing optical elements (1, 14) have no focal point or no focal line, and the shape of the focusing optical elements (1, 14) is changed under the effect of external influences such that they have a focal point or a focal line.

7. Security element according to one of the preceding claims, **characterized in that** a further layer (2), which is heatable by application of an electric current or an electromagnetic field, is arranged between the carrier layer (5) and the imaging elements (4, 6).

8. Security element according to at least one of the preceding claims, **characterized in that** the change in the location of the focal points or the focal lines of the focusing optical elements (1, 14) with respect to the imaging elements (4, 6) is reversible or irreversible.

9. Security element according to at least one of the preceding claims, **characterized in that** the grid-type arrangement of the focusing optical elements (1, 14) and the position of the imaging elements (4, 6) are coordinated with one another.

## Revendications

1. Élément de sécurité, destiné à des papiers de sécurité, des documents de valeur, des cartes d'identité ou similaires, qui est constitué d'une configuration en trame d'éléments optiques focalisants (1, 14) et d'éléments de reproduction, chacun des éléments optiques focalisants (1, 14) comportant un point focal ou une ligne focale, de sorte que la configuration en trame d'éléments optiques focalisants (1, 14) reproduise de manière identifiable les éléments de reproduction (4, 6) qui se trouvent dans le point focal ou la ligne focale des éléments optiques focalisants (1, 14), la position des points focaux ou des lignes focales d'au moins une partie des éléments optiques focalisants (1, 14) étant influençable en rapport des éléments de reproduction (4, 6) sous l'action d'influences extérieures, de telle sorte
• qu'après une action des influences extérieures, les éléments de reproduction (4, 6), qui auparavant se trouvaient à l'extérieur des points focaux ou des lignes focales des éléments optiques focalisants (1, 14) soient placés dans le point focal ou la ligne focale d'au moins un élément optique focalisant (1, 14) et/ ou
• qu'après une action des influences extérieures, les éléments de reproduction (4, 6), qui auparavant se trouvaient dans le point focal ou la ligne focale d'au moins un élément optique focalisant (1, 14) soient placés à l'extérieur du point focal ou de la ligne focale des éléments optiques focalisants (1, 14),
les influences extérieures étant une pression mécanique ou une déformation mécanique, **caractérisé en ce que** les éléments optiques focalisants (1, 14) sont constitués d'une matière élastique ou plastique, de sorte que la distance focale des éléments optiques focalisants (1, 14) change sous l'action d'une pression mécanique qui agit sur les éléments optiques focalisants (1, 14), l'élément de sécurité comportant au moins une couche de support (5), sur une face de la couche de support étant placés les éléments optiques focalisants (1, 14) et les éléments de reproduction (4, 6) se trouvant sur la face opposée de la couche de support.

2. Élément de sécurité selon la revendication 1, **caractérisé en ce que** les éléments optiques focalisants (1, 14) sont des lentilles ou des lentilles de Fresnel ou des miroirs concaves ou une association de lentilles, ou de lentilles de Fresnel ou de miroirs concaves placés côte à côte.

3. Élément de sécurité selon l'une quelconque des revendications précédentes, **caractérisé en ce que** la matière dans laquelle sont constitués les éléments optiques focalisants (1, 14) fait preuve d'un indice de réfraction et ledit indice de réfraction est modifiable par l'action d'une influence extérieure.

4. Élément de sécurité selon au moins l'une quelconque des revendications précédentes, **caractérisé en ce qu'**entre la configuration en trame d'éléments optiques focalisants (1, 14) et les éléments de reproduction (4, 6) est placée une couche (8, 8.1, 10) dont l'épaisseur et/ ou dont l'indice de réfraction est influençable par l'action d'influences extérieures, comme une pression mécanique et/ou une température.

5. Élément de sécurité selon au moins l'une quelconque des revendications précédentes, **caractérisé en ce que** la forme des éléments optiques focalisants (1, 14) est modifiée par l'action d'influences extérieures, de telle sorte qu'ils ne comportent plus aucun point focal ou aucune ligne focale.

6. Élément de sécurité selon au moins l'une quelconque des revendications 1 à 4, **caractérisé en ce que** sans aucune action d'influences extérieures, les éléments optiques focalisants (1, 14) ne comportent aucun point focal ou aucune ligne focale et sous l'action d'influences extérieures, la forme des éléments optiques focalisants (1, 14) se modifie de telle sorte qu'ils comportent un point focal ou une ligne focale.

7. Élément de sécurité selon l'une quelconque des revendications précédentes, **caractérisé en ce qu'**entre la couche de support (5) et les éléments de reproduction (4, 6) est placée une couche supplémentaire (2) qui peut être chauffée par application d'un courant électrique ou d'un champ électromagnétique.

8. Élément de sécurité selon au moins l'une quelconque des revendications précédentes, **caractérisé en ce que** la modification de la position des points focaux ou des lignes focales des éléments optiques focalisants (1, 14) en rapport aux éléments de reproduction (4, 6) est réversible ou irréversible.

9. Élément de sécurité selon au moins l'une quelconque des revendications précédentes, **caractérisé en ce que** la configuration en trame der éléments optiques focalisants (1, 14) et la position des éléments de reproduction (4, 6) sont adaptées l'une à l'autre.
